Europäisches Patentamt

European Patent Office

Office européen des brevets

(19)

(11) **EP 1 146 659 A1**

## (12) EUROPEAN PATENT APPLICATION
published in accordance with Art. 158(3) EPC

(43) Date of publication:
17.10.2001 Bulletin 2001/42

(51) Int Cl.⁷: **H04B 3/54**, H04L 29/08

(21) Application number: 00976326.9

(86) International application number:
**PCT/JP00/08125**

(22) Date of filing: 17.11.2000

(87) International publication number:
**WO 01/39389 (31.05.2001 Gazette 2001/22)**

(84) Designated Contracting States:
**AT BE CH CY DE DK ES FI FR GB GR IE IT LI LU MC NL PT SE TR**

(30) Priority: 22.11.1999 JP 33199399

(71) Applicant: **MITSUBISHI DENKI KABUSHIKI KAISHA**
**Tokyo 100-8310 (JP)**

(72) Inventors:
• **MATSUMOTO, Wataru, Mitsubishi Denki K. K.**
**Chiyoda-ku, Tokyo 100-8310 (JP)**
• **HANE, Toshihisa, Mitsubishi Denki K. K.**
**Chiyoda-ku, Tokyo 100-8310 (JP)**
• **MIZUGAI, Yoshinori, Mitsubishi Denki K. K.**
**Chiyoda-ku, Tokyo 100-8310 (JP)**
• **NARIKAWA, Masafumi, Mitsubishi Denki K. K.**
**Chiyoda-ku, Tokyo 100-8310 (JP)**

(74) Representative: **Pfenning, Meinig & Partner**
**Mozartstrasse 17**
**80336 München (DE)**

## (54) COMMUNICATION METHOD AND COMMUNICATION DEVICE

(57) A method of performing data communication, by using a multicarrier modulation-demodulation mode, between a plurality of communication devices connected to a transmission path is suggested. When a plurality of communication devices simultaneously transmit data, one communication device serves as a master, i.e. the controller 1, and manages and adjusts communication states of a transmission path. As a result, transmission delays are greatly reduced, and it is possible to realize data communication requiring the real-time characteristic such as a call or regeneration of a dynamic image.

FIG.1

(a)

MIDDLE-VOLTAGE DISTRIBUTION LINE
POLE-TOP TRANSFORMER
LOW-VOLTAGE DISTRIBUTION LINE
DATA LINE (OPTICAL-FIBER CABLE)
POLE

(b)

VOLTAGE
UPWARD
DOWN-WARD
FREQUENCY
200kHz
450kHz

EP 1 146 659 A1

## Description

TECHNICAL FIELD

The present invention relates to a method of and system for communication for communicating data by using a digital communication mode such as DMT (Discrete Multi Tone) modulation-demodulation mode, OFDM (Orthogonal Frequency Division Multiplex) modulation-demodulation mode, CAP (Carrier-less Amplitude Phase) modulation-demodulation mode, or PAM (Pulse Amplitude Modulation) modulation-demodulation mode. Particularly, this invention relates to a communication method for a plurality of multiply-connected communication device to simultaneously perform communication (data, sounds, and pictures) through an existing power line and a communication device capable of realizing the communication method. However, the present invention can be applied not only to a communication device for performing power line communication but also to every communication device for performing cable communication and radio communication through a normal communication line.

BACKGROUND ART

A conventional communication method is described below. A power line modem has been recently watched which performs communication through an existing electric-power line (also referred to as a electric line) without adding new lines in order to reduce costs or effectively use existing equipment. A communication mode using the power line modem is hereafter referred to as a power line-carrying communication mode. The power line modem performs various processings such as control of electrical appliances inside or outside the houses and in the factories and the shops connected by power lines and data communication by networking the electrical appliances.

For example, data communication (e.g. Internet) to be performed between multiply-connected communication devices is used as cable-mode digital communication using a power line modem in addition to networking of the above electrical products.

A communication method using SS (Spread Spectrum) mode is considered at present as a communication method according to the above power line modem. For example, when using the SS mode, the transmitter expands the band of a signal up to tens to thousands of times by modulating a predetermined information and then diffusion-modulating the information by diffusion codes, and transmits the signal. The receiver performs diffusion demodulation (inverse diffusion) by using diffusion codes same as those of the transmission side and then, demodulates the information.

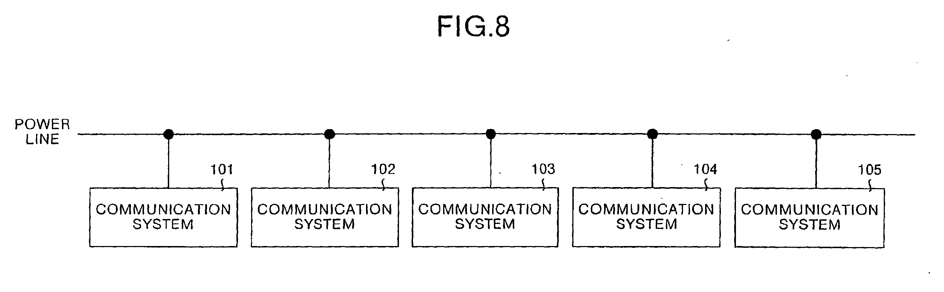

Fig. 8 is an illustration showing connection of communication devices in the above power line-carrying communication mode. In the case of this mode, a plurality of communication devices (101, 102, 103, 104, and 105) are connected by a power line and data can be communicated between communication devices connected to the same power line. In this mode, CSMA (Carrier Sense Multiple Access) mode is used as a protocol.

Specifically, data transmission control on a transmission path is performed as follows. First, a communication device requesting the data transmission confirms whether communication is performed between other communication devices by detecting a carrier on the transmission path. Moreover, unless there is a communication device currently transmitting data, the communication device transmits the data. However, when there is a communication device currently transmitting data, the communication device confirms the working state of the transmission path by detecting a carrier again after the above data transmission is completed and starts data transmission after the system confirms that there is no data on the transmission path.

However, the above conventional communication device using the power line-carrying communication mode (SS mode) has a problem that a transmission delay is very large and thereby, data communication such as communication of sounds or pictures requiring the real-time characteristic cannot - be performed.

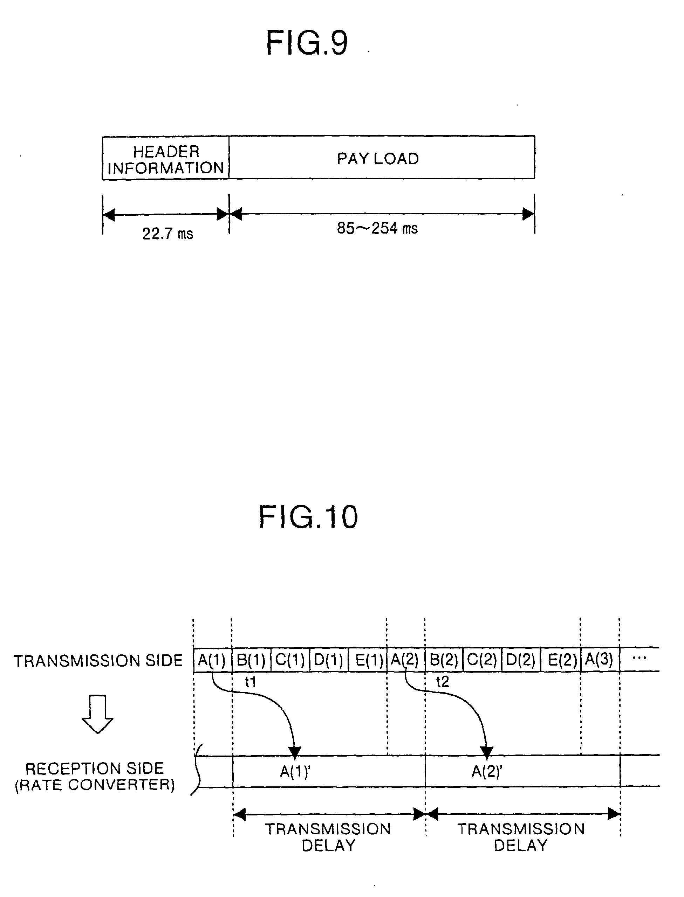

This problem will be explained in detail below. Fig. 9 is an illustration showing a frame format of a signal to be transmitted by a conventional communication device. As illustrated, every signal transmitted by the conventional communication device at the same time is constituted of, for example, header information of 22.7 ms (specified value) and a pay load of 85 to 254 ms (specified value) . Control information such as the information of the transmission source and the transmission destination of the signal is included in the header information. Data length of the pay load and information other than the control information, that is, data is written in the pay load.

Fig. 10 is an illustration for specifically explaining the above problem. In Fig. 10, A(1), A(2), ... denote the data to be transmitted by the communication device 101, B(1), B(2), ... denote the data to be transmitted by the communication device 102, C(1), C(2), ... denote the data transmitted by the communication device 103, D (1), D(2), ... denote the data to be transmitted by the communication device 104, and E(1), E(2), ... denote the data to be transmitted by the communication device 105.

To perform sound communication by using a conventional communication method, each communication device shown in Fig. 8 uses the above-described CSMA mode. Therefore, communication devices requiring communication sequentially transmit audio data, starting with a communication device which first confirms that there is no data on a transmission path as shown at the upper portion of Fig. 10. Then, a communication device which receives the audio data converts the received signals into continuous signals by an internal rate converter as shown at the lower portion of Fig. 10.

Therefore, for example, when the communication device 101 transmits audio data, a transmission delay occurs at the communication device which receives the data at the shortest (when data transmission frequencies of all the communication devices are same) from the time t1 when the communication device 101 completes the transmission of data A(1) up to the time t2 when the communication device 101 completes the transmission of the next data A(2).

$$t2 - t1 = (22.7 \text{ ms} + 85 \text{ ms}) \times 5 = 0.5385 \text{ s}$$

Moreover, the following transmission delay occurs at the longest (when data transmission frequencies of all communication devices are equal to each other).

$$t2 - t1 = (22.7 \text{ ms} + 254 \text{ ms}) \times 5 = 1.3835 \text{ s}$$

The above results are obtained when five communication devices are used as shown in Fig. 10. However, when more than five communication devices are used, the transmission delay increases in accordance with the number of communication devices.

Thus, in case of the conventional communication method, conversation (call) may not be effectuated because a transmission delay greatly exceeds an allowable range (approx. 10 ms) in which conversation is effectuated. Moreover, the same is true for a picture such as a dynamic image requiring the real-time characteristic.

Moreover, in case of the conventional communication method using the above power line-carrying transmission mode (SS mode), the CSMA mode is used as an access mode. Therefore, when multiply-connected communication devices request data transmission at the same time, scrambling for a transmission path occurs and thereby, it may be impossible to transmit data at a constant frequency. Therefore, a communication device having a low transmission frequency has a problem that the transmission delay further increases compared with a calculation result by the above calculation formula.

It is an object of the present invention to provide a method of and system for communication using a multicarrier modulation-demodulation mode such as the DMT modulation-demodulation mode or OFDM modulation-demodulation mode and moreover and making it possible to greatly reduce the above transmission delay and realize data communication such as a call or regeneration of a dynamic image requiring the real-time characteristic.

DISCLOSURE OF THE INVENTION

The communication method according to one aspect of the present invention uses the multicarrier modulation-demodulation mode and performing data communication between communication devices multiply-connected to a transmission path. Further, when the multiply-connected communication devices performs data communication at the same time and a specific communication device serving as a master manages and adjusts communication states of a transmission path.

The communication method according to another aspect of the present invention divides a frequency band according in the multicarrier modulation-demodulation mode into a upward band and a downward band and performing bidirectional communication between the communication device serving as a master and other communication devices respectively serving as slaves.

In the communication method according to still another aspect of the present invention, each communication device serving as the slave establishes synchronization by using a specific tone for the synchronization transmitted from the communication device serving as the master.

In the communication method according to still another aspect of the present invention, the transmission data is constituted of header information including transmission-destination information and a pay load.

In the communication method according to still another aspect of the present invention, the communication device serving as the master performs the above-mentioned adjustment by using a specific polling tone and thereby designating a transmission timing to a communication device serving as the slave.

The communication method according to still another aspect of the present invention uses the multicarrier modulation-demodulation mode so as to be able to perform data communication with other communication devices connected to the same transmission path. Moreover, the communication states of the transmission path is managed and adjusted when the communication device serves as the master, and data communication is performed in accordance with the control by the master when the communication device serves as the slave.

The communication method according to still another aspect of the present invention uses an upward frequency band and a downward frequency band and thereby performs bidirectional communication with other communication device.

The communication method according to still another aspect of the present invention uses a specific tone for synchronization transmitted from the communication device serving as the master and thereby establishes synchronization when the present communication device serves as the slave.

The communication method according to still another aspect of the present invention uses a specific polling tone and thereby, designates a transmission timing to a communication device serving as the slave and performs the above-mentioned adjustment when the present communication device serves as the master.

## BRIEF DESCRIPTION OF THE DRAWINGS

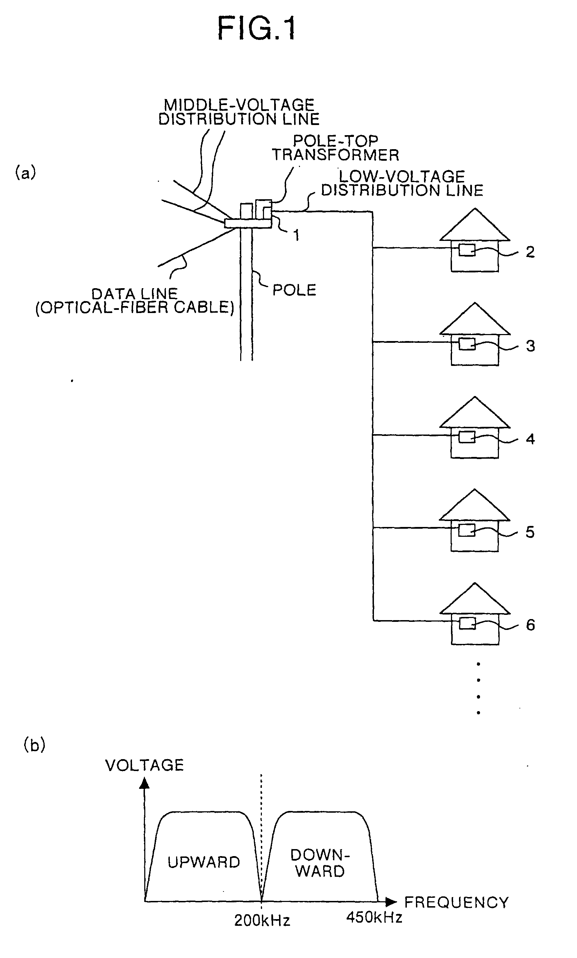

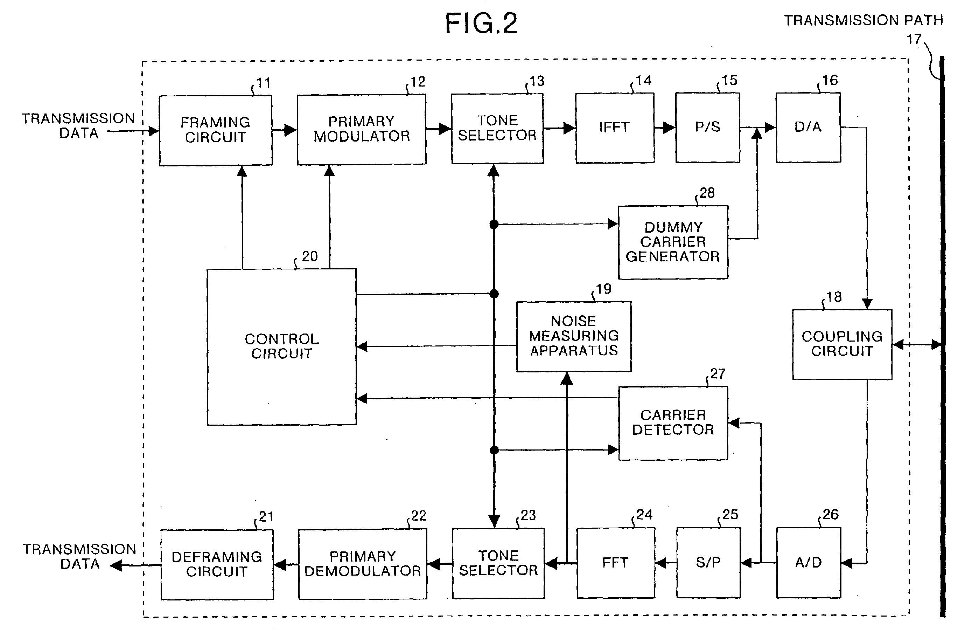

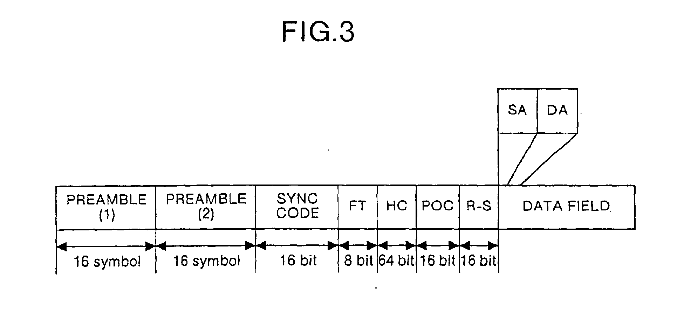

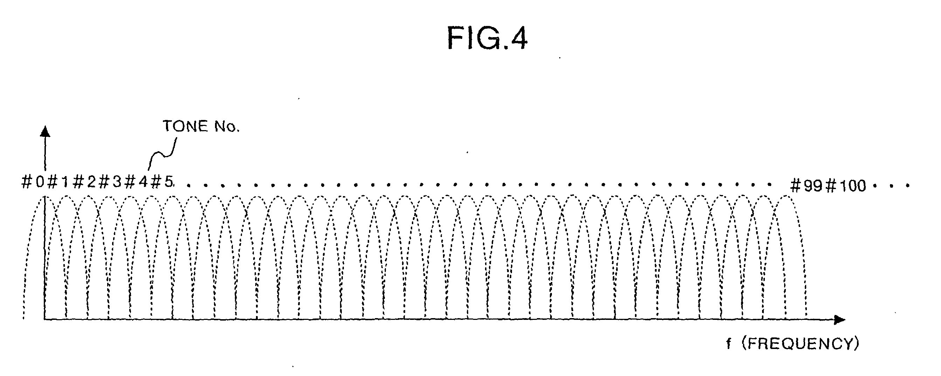

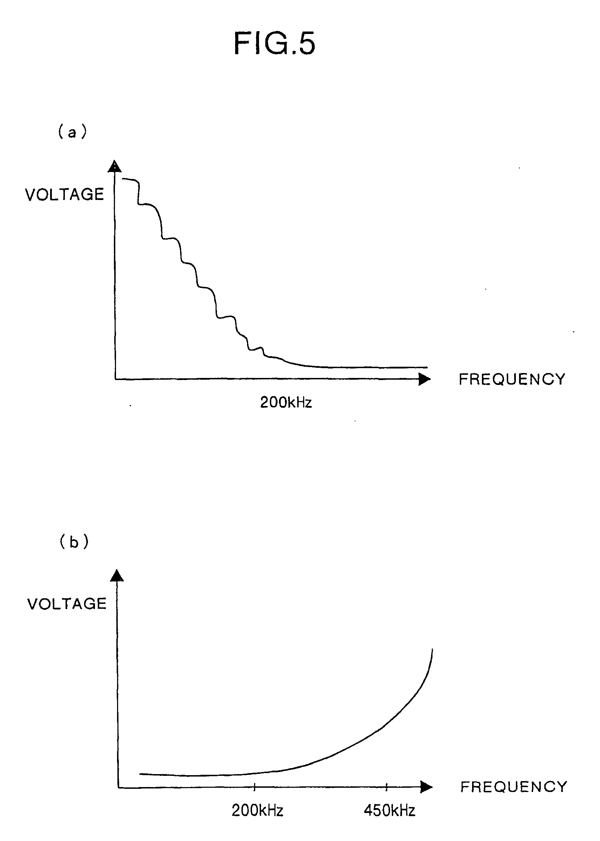

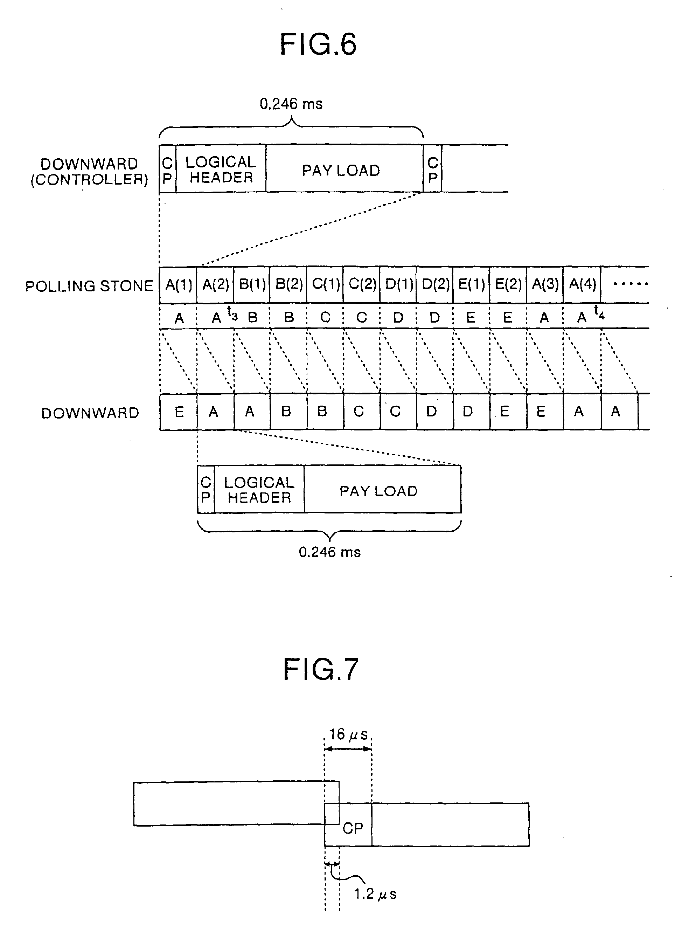

Fig. 1 shows the connection relationship of the communication device (see Fig. 1(a)) and the communication method by the communication devices (see Fig. 1(b)) of the present invention; Fig. 2 is an illustration showing a configuration of a communication device; Fig. 3 is an illustration showing a configuration of a frame generated through framing by a framing circuit 11; Fig. 4 is an illustration showing a configuration of a tone used for data communication by a communication device; Fig. 5 shows noise distribution in the power line-carrying communication mode; Fig. 6 is an illustration for explaining the operation of a controller 1 serving as a master and the operation of each communication device serving as a slave; Fig. 7 is an illustration showing relations between transmission data values when the distance between a controller 1 and a communication device is minimum and the distance is maximum; Fig. 8 is an illustration showing the connection between conventional communication devices; Fig. 9 is an illustration showing the frame format of a signal to be transmitted by a conventional communication device; and Fig. 10 is an illustration for specifically explaining conventional problems.

## BEST MODE FOR CARRYING OUT THE INVENTION

Preferred embodiments of the method of and system for communication of the present invention are described below by referring to the accompanying drawings. However, the present invention is not restricted to the embodiments. Moreover, in the case of the following embodiments, a "power line modem" for performing data communication through an existing power line is described as a specific example. However, a communication device of the present invention can be applied not only to a power line modem but also to every communication device for performing cable communication and radio communication through a normal communication line in accordance with the multicarrier modulation-demodulation mode and single-carrier modulation-demodulation mode.

First Embodiment:

A communication method of the present invention realizes 1-to-N (N denotes an integer) high-speed communication on a transmission path to which a plurality of communication devices are connected by greatly reducing transmission delays compared to the case of the prior art using the SS mode from the viewpoint of realizing transmission and reception of sounds and dynamic images through an existing power line, which cannot be realized by the prior art.

Fig. 1 shows the connection relationship of the communication device (see Fig. 1(a)) and the communication method by the communication devices (see Fig. 1(b)) of the present invention. The communication device 1 serves as a master ("controller") and communication devices 2, 3, 4, 5, and 6 serve as slaves for data communication in this embodiment. Each communication device uses the DMT modulation-demodulation mode as a communication mode and data communication of sounds and dynamic images is performed in accordance with the control (management) by the controller 1. Moreover, in this embodiment, as shown in Fig. 1 (b), a frequency band is divided in the "upward (from slave communication devices 2, 3, 4, 5, and 6 to the master communication device 1)" direction and the "downward (the master communication device 1 to the slave communication devices 2, 3, 4, 5, and 6)" direction.

The configuration and basic operations of a communication device using the above DMT modulation-demodulation mode are described below. Fig. 2 is an illustration showing the configuration of any of the communication devices . The communication device comprises framing circuit 11, primary modulator 12, tone selector 13, inverse fast Fourier-transform circuit (IFFT) 14, parallel/serial conversion circuit (P/S) 15, digital/analog conversion circuit (D/A) 16, transmission path (i.e. the power line) 17, coupling circuit 18, noise-measuring apparatus 19, control circuit 20, deframing circuit 21, primary demodulator 22, tone selector 23, fast Fourier-transform circuit (FFT) 24, serial/parallel conversion circuit (S/P) 25, analog/digital conversion circuit (A/D) 26, carrier detector 27, and dummy-carrier generator 28. The framing circuit 11, primary modulator 12, tone selector 13, IFFT 14, P/S 15, and D/A 16 constitute a transmission system. The A/D 26, S/P 25, FFT 24, tone selector 23, primary demodulator 22, and deframing circuit 21 constitute a reception system.

First, operations of the transmission system will be described. For example, when transmission data is input from a data processor (not shown) such as a personal computer connected to the above communication device (power line modem), the framing circuit 11 performs the framing shown in Fig. 3 to be described later and outputs the frame to the primary modulator 12. Then, the primary modulator 12 modulates the received frame in accordance with the DBPSK or DQPSK mode designated by the primary modulation/demodulation-mode selecting information sent from the control circuit 20 and encodes the same frame into each tone in the multicarrier-modulation mode, then outputs the signal to the tone selector 13. Each communication device encodes the same frame into a plurality of tones (e.g. 5 tones) at predetermined intervals (hereafter referred to as tone set) in the low-speed mode. Under the high-speed mode, each communication device encodes frames different from each other into all tones.

Thereafter, the tone selector 13 selects three adjacent tones with the least influence of noises out of the above tone set under the low-speed mode in accordance with the information from the control circuit 20 and outputs the tones to the IFFT 14 (under the low-speed mode) . Then, the IFFT 14 inverse-Fourier-trans forms three received tones and thereby converts frequency-axis data into time-base data to output the data to the P/S 15. Under the high-speed mode, however, the IFFT 14 inverse-Fourier-transforms all received tones and thereby, converts frequency-axis data into time-base data to output the data to the P/S 15.

The P/S 15 converts the parallel data output from the IFFT 14 into serial data, moreover outputs the serial data to the D/A 16, and finally the D/A 16 applies digital/analog conversion to the serial data and transmits the analog signal to other communication devices (not shown) connected to the power line 17 through the coupled circuit 18 and power line 17.

As a result, the same multicarrier data superimposed on three tones at predetermined frequency intervals is output to the power line 17 under the low-speed mode. Thereby, in the case of a communication device for receiving the data, data communication stronger in power line noises than single-carrier power line communication by the frequency intervals is realized even if noises are concentrated on a certain frequency band. Moreover, different multicarrier data values superimposed on all tones are output to the power line 17 under the high-speed mode. Thereby, a transfer rate can be increased.

Then, operations of the reception system will be described. In this case, the operations are described by using the configuration of the reception system in Fig. 2 because only one communication device is connected to the transmission path 17 for convenience. First, when multicarrier data is transmitted from the transmission system as described above, the reception system of other communication device performs operations inverse to those of the transmission system to demodulate data. Specifically, the multicarrier data sent from the transmission-side communication device is first captured and the A/D 26 performs analog/digital conversion. Then, the carrier detector 27 detects a carrier through carrier sensing and tone verification and then, establishes symbol synchronization. Then, the S/P 25 converts the serial data converted to digital data to parallel data and outputs the parallel data to the FFT 24.

The FFT 24 converts time-base multicarrier data to the data on a frequency axis by applying Fourier transform to the parallel data and outputs the frequency-axis data to the tone selector 23 and noise-measuring apparatus 19. Thereafter, the tone selector 23 selects tones specified by the control circuit 20 and outputs the tones to the primary demodulator 22. Then, the primary demodulator 22 demodulates the data for each tone in accordance with the primary demodulation mode specified by the primary-modulation/demodulation selecting information sent from the control circuit 20.

Finally, the deframing circuit 21 generates reception data by deframing the primary-demodulated data and outputs the reception data to a unit (not shown) connected to the communication device. Deframing is a processing opposite to deframing performed by the framing circuit 11 or a processing for separating preambles (1) and (2) to be mentioned later and a control code from the frame of the primary-demodulated data and synthesizing only data fields, that is, a processing for reconstituting reception data into the form of original transmission data.

Fig. 3 is an illustration showing a configuration of a frame generated through framing performed by the framing circuit 11. The frame shown in Fig. 3 is constituted of a preamble-(1) field which is an area of a carrier-detecting signal, a preamble-(2) field which is an area of a symbol-synchronizing signal, a sync-code field which is an area of a predetermined fixed code, a FrameType (FT) field which is an area of a signal showing the length of a data field, a HouseCode (HC) field which is an area of a house-identifying code, a POC (Power Line Communication Overhead Control) field which is an area of a control command used for a physical layer, a R-S code field which is an area of error correction code for FT, HC, and POC, and a data field. The above frame is generated by the framing circuit 11, modulated through the above processing, and output to the transmission path 17.

Thereafter, the frame on the transmission path is received by every communication device connected to the transmission path. The control circuit 20 identifies the HC and when the HC coincides with the HC of its own house, determines that the data transmitted to the transmission path is addressed to its own, checks and corrects errors by using a RS (Reed Solomon) code to understand contents of the errors.

This embodiment reduces transmission delays in accordance with the control by the controller 1 shown in Fig. 1 by using the basic operation of the above communication device, particularly, the operation under the high-speed mode to realize 1(controller 1)-to-N(each communication device) high-speed communication on a transmission path to which a plurality of communication devices are connected.

The communication method of this embodiment for realizing a call by using an existing power line, that is, for transreceiving an audio signal is described below in detail by referring to Fig. 1. Fig. 4 is an illustration showing a configuration of tones used for data communication by the communication device shown in Fig. 2. In the case of a power line modem, tones up to 450 kHz at an interval of 4.3125 kHz is assumed as shown in Fig. 4 to perform data communication by using these tones. Moreover, the pole-top transformer shown in Fig. 1(a) can supply power to 20 houses max. Therefore, the controller 1 serving as a master performs data communication of up to 1:20 through the illustrated low-voltage distribution line. Moreover, as shown in Fig. 1(a), the controller 1 connects with an optical-fiber cable serving as a data line for communicating data and communication between controllers (not shown) is performed through the optical-fiber cable.

First, the communication method of this embodiment realizes bidirectional high-speed data communication by assigning a frequency band of 200 kHz or lower as an "upward" band and a frequency band of 200 kHz or higher as a "downward" band to transreceive audio data as shown in Fig. 2.

In this case, the reason why the division boundary is set to 200 kHz is described below. Fig. 5 shows noise distributions in the power line-carrying communication mode. Precisely, Fig. 5(a) shows a noise distribution generated in each house in Fig. 1 to influence a transmission path and Fig. 5(b) shows a noise distribution generated in the pole-top transformer in Fig. 1 to influence a transmission path. As shown in Fig. 5(a), noise generated in each house include frequency components lower than 200 kHz. Therefore, in the case of transmission from the controller 1 to the communication devices 2 to 6, that is, when using a frequency band equal to or lower than 200 kHz for "downward", the influence of noises is received' and the communication characteristic is deteriorated. Therefore, a frequency band equal to or lower than 200 kHz is used for "upward". Moreover, as shown in Fig. 5(b), noise generated in the pole-top transformer include frequency components higher than 200 kHz. Therefore, in the case of transmission from the communication devices 2 to 6 to the controller 1, that is, when using'for "upward" a frequency band equal to or lower than 200 kHz, the influence of noises is received and the communication characteristic is deteriorated. Therefore, a frequency band equal to or lower than 200 kHz is used for "downward".

Fig. 6 is an illustration for explaining operations of the controller 1 serving as a master and operations of each communication device serving as a slave. A(1), A(2), A(3), S(4), ... denote the data to be transmitted from the controller 1 to the communication device 2, B(1), B(2), ... denote the data to be transmitted to the communication device 3, C(1), C(2), ... denote the data to be transmitted to the communication device 4, D(1), D(2), ... denote the data to be transmitted to the communication device 5, and E(1), E(2), ... denote the data to be transmitted to the communication device 6.

First, downward data transmission (audio data) to each communication device from the controller 1 is described. In this case, it is assumed that synchronization is already established between the controller 1 and each communication device. That is, each communication device completes establishment of synchronization by using a predetermined synchronization tone (e.g. tone #64) transmitted from the controller 1 and thereby, each communication device is ready to receive audio data. Under the above state, when the controller 1 serving as a master transmits data to the communication devices 2 to 6 serving as slaves, it transmits data to the transmission path in order of A(1), A(2), B(1), B(2), C(1) ....

In this case, each data to be transmitted has a data length of 0.246 ms (output unit of FFT: 1 symbol) and is constituted of a CP (cyclic prefix), a logical header, and a pay load and the information of a transmission-destination communication device is included in the logical header. The CP is inserted between symbols in order to prevent interference between symbols, to which 16 samples at the end of a data part are attached. Moreover, in the case of this embodiment, every two data values are transmitted to each communication device. However, it is also permitted to properly change the number of data values as long as a transmission delay does not affect a call.

Furthermore, the controller 1 transmits the above data and moreover transmits "upward"-directional transmission-timing information to each communication device. Hereafter, this is referred to as a polling tone. In this case, while data is transmitted to each communication device, a polling tone is transmitted to the communication device. Thereby it is possible to adjust transmission paths for slaves.

Then, every communication device receiving the data {A(1), A(2), ...} from the controller 1 confirm the logical header in the data and confirms whether the data is supplied to the communication device of its own. Only a communication device confirming that the data is supplied to the communication device of its own demodulates the data.

Moreover, each communication device receives data from the controller 1 and always confirms the above polling tone. Then, a communication device receiving a polling tone for the communication device receives the next data and simultaneously transmits data to the controller 1. Specifically, when the controller 1 transmits the data A(1) and a polling tone A, the communication device 2 receives the data and then, starts receiving the next data A(2) and preferentially starts transmission of data to the controller 1. Thus, a communication device receives a polling tone and understands the transmission timing assigned to the communication device.

As described above, when the controller 1 adjusts upward transmission paths, the distance between the controller 1 and each communication device becomes a problem. In the case of this embodiment, however, because a CP is provided to transmission data, it is possible to avoid collision between data values. The reason is specifically described below. For example, in the case of the connective relation in Fig. 1 used for this embodiment, the distance between communication devices is specified as "maximum 200 m". Moreover, it is known that the delay of a transmission path is approx. 6 ns every meter in general. Therefore, the maximum delay of the transmission path of this system becomes 6ns×200m=1.2 μs even when considering a case in which the distance between communication devices is maximum. The CP of each transmission data is approx. 16 μs. Fig. 7 shows the above state. Therefore, in this case, it is possible to avoid collision between data values because the delay of the transmission path is greatly small compared to the CP.

Thus, in the case of this embodiment, the controller 1 as a master managed the transmission path so that it is possible to make frequencies of data transmission to all communication devices constant and prevent a transmission delay frombeing increased because a transmission path cannot be used for a long time like the case of the CSMA mode. Moreover, because upward and downward frequency bands are divided, a transmission path is not exclusively occupied to establish synchronization.

Moreover, in the case of this embodiment, it is possible to reduce a transmission delay in accordance with the above communication method. Therefore, it is also possible to transreceive the data of sound or dynamic image requiring the real-time characteristic. Specifically, when audio data is transferred between the controller 1 and the communication device 2 in this embodiment, the following transmission delay occurs in the communication device 2 in the period from the time t3 (refer to Fig. 6) when the controller 1 completes transmission of the data values A(1) and A(2) up to the time t4 (refer to Fig. 6) when the controller 1 completes transmission of the data values A(3) and A(4).

$$t4 - t3 = 0.246 \text{ ms} \times 2 \times 5 = 2.46 \text{ ms}$$

However, the above result is obtained from the case in which five communication devices under communication are used. For example, when the number of communication devices under communication is equal to the above-described max number 20, the following transmission delay occurs in the communication device 2 in the period from the time t3 when the controller 1 completes transmission of the data values A(1) and A(2) up to the time t4 when the controller 1 completes transmission of the next data values A(3) and A(4).

$$t4 - t3 = 0.246 \text{ ms} \times 2 \times 20 = 9.84 \text{ ms}$$

When transmitting audio data, it is estimated that the tolerance of a delay in a rate converter is equal to approx. 10 ms. A transmission delay in this embodiment meets the tolerance. Therefore, in the case of this embodiment, it is possible to comfortably perform a call by a telephone because a delay can be greatly decreased compared to a conventional case. The same is true for a picture such as a dynamic image requiring the real-time characteristic.

As described above, according to the present invention, it is possible to make frequencies of data transmission to all communication devices constant because a multicarrier modulation-demodulation mode is adopted as a communication mode a specific communication device serving as a master manages a transmission path and moreover, greatly reduce transmission delays generated by the fact that a transmission path cannot be used for a long time when using the CSMA mode. Thereby, an advantage can be obtained that it is possible to obtain a communication method capable of realizing data communication such as a call or regeneration of a dynamic image requiring the real-time characteristic.

According to another aspect of the present invention, it is possible to obtain a communication method capable of excluding occupation of a transmission path caused when synchronization is established because upward and downward frequency bands are divided.

According to still another aspect of the present invention, it is possible to obtain a communication method capable of always confirming a synchronization tone at the slave side by transmitting the tone to a downward band.

According to still another aspect of the present invention, it is possible to obtain a communication method capable of easily determining whether data is supplied to the communication device of its own.

According to still another aspect of the present invention, it is possible to obtain a communication method capable of easily determining whether transmission timing is assigned to the communication device of its own by receiving a polling tone.

According to still another aspect of the present invention, it is possible to make frequencies of data transmission to all communication devices constant and moreover, when using the CSMA mode, greatly reduce transmission delays caused by the fact that a transmission path cannot be used for a long time. Thereby, it is possible to obtain a communication device capable of realizing data communication such as a call or regeneration of a dynamic image requiring the real-time characteristic.

According to still another aspect of the present invention, it is possible to obtain a communication device capable of excluding occupation of a transmission path caused when synchronization is established because upward and downward frequency bands are divided.

According to still another aspect of the present invention, it is possible to obtain a communication device capable of always confirming a synchronization tone by transmitting the tone to a downward band.

According to still another aspect of the present invention, it is possible to obtain a communication device capable of easily determining whether transmission time is assigned to the communication device by receiving a polling tone.

INDUSTRIAL APPLICABILITY

As described above, a method of and system for communication of the present invention uses a digital communication mode such as DMT modulation-demodulation mode, OFDM modulation-demodulation mode, CAP modulation-demodulation mode, or PAM modulation-demodulation mode and is effective for the communication using a transmission path which may be influenced by noises, particularly suitable for a power line modem for performing the communication (data, sound, picture or the like) using an existing power line.

**Claims**

1. A communication method of using a multicarrier modulation-demodulation mode to perform data communication between a plurality of communication devices connected to a transmission path, wherein

   when said plurality of communication devices simultaneously perform data communication, a specific communication device out of said plurality of communication devices serves as a master and the remaining communication devices serve as slaves, and said master communication device manages and adjusts communication state of said transmission path.

2. The communication method according to claim 1, wherein a frequency band in the multicarrier modulation-demodulation mode is divided into an upward band and a downward band to perform bidirectional communication between said master communication device and said slave communication device/s.

3. The communication method according to claim 2, wherein each slave communication device establishes synchronization by using a specific tone for synchronization transmitted from said master communication device.

4. The communication method according to claim 1, wherein the transmission data is constituted of header information including transmission-destination information and a pay load.

5. The communication method according to claim 1, wherein said master communication device performs the adjustment of the communication state of said transmission path by using a specific polling tone and there by designating transmission timing to said slave communication device/s.

6. A communication device which performs data communication with other communication devices connected to the same transmission path by using a multicarrier modulation-demodulation mode, wherein

   said communication device manages and adjusts communication state of said transmission path when said communication device serves as a master, and performs data communication in accordance with the control by a master when said communication device serves as a slave.

7. The communication device according to claim 6, wherein said communication device performs bidirectional communication with said other communication devices by using an upward frequency band and a downward frequency band.

8. The communication device according to claim 7, wherein, when said communication device serves as said slave it establishes synchronization by using a specific tone for synchronization transmitted from a communication device serving as said master.

9. The communication device according to claim 6, wherein, when said communication device serves as said master it performs the adjustment of the communication state of said transmission path by using a specific polling tone and thereby designating transmission timing to a communication device serving as said slave.

# FIG.1

(a)

MIDDLE-VOLTAGE DISTRIBUTION LINE
POLE-TOP TRANSFORMER
LOW-VOLTAGE DISTRIBUTION LINE
DATA LINE (OPTICAL-FIBER CABLE)
POLE

(b)

VOLTAGE

UPWARD

DOWN-WARD

FREQUENCY

200kHz

450kHz

FIG.2

# FIG.3

| | | SA | DA |
|---|---|---|---|

| PREAMBLE (1) | PREAMBLE (2) | SYNC CODE | FT | HC | POC | R-S | DATA FIELD |
|---|---|---|---|---|---|---|---|
| 16 symbol | 16 symbol | 16 bit | 8 bit | 64 bit | 16 bit | 16 bit | |

# FIG.4

TONE No.

#0 #1 #2 #3 #4 #5 · · · · · · · · · · · · · · · · · · · · · · · · · · #99 #100 · · ·

f (FREQUENCY)

EP 1 146 659 A1

# FIG.5

( a )

( b )

# FIG.6

0.246 ms

| | | |
|---|---|---|
| DOWNWARD (CONTROLLER) | C P | LOGICAL HEADER |
| | | PAY LOAD |
| | | C P |

POLLING STONE

| A(1) | A(2) | B(1) | B(2) | C(1) | C(2) | D(1) | D(2) | E(1) | E(2) | A(3) | A(4) | · · · · |
|---|---|---|---|---|---|---|---|---|---|---|---|---|

| A | A $t_3$ B | B | C | C | D | D | E | E | A | A $t_4$ |
|---|---|---|---|---|---|---|---|---|---|---|

DOWNWARD

| E | A | A | B | B | C | C | D | D | E | E | A | A |
|---|---|---|---|---|---|---|---|---|---|---|---|---|

| | | |
|---|---|---|
| C P | LOGICAL HEADER | PAY LOAD |

0.246 ms

# FIG.7

16 μs

CP

1.2 μs

# FIG.8

POWER
LINE

COMMUNICATION SYSTEM 101
COMMUNICATION SYSTEM 102
COMMUNICATION SYSTEM 103
COMMUNICATION SYSTEM 104
COMMUNICATION SYSTEM 105

EP 1 146 659 A1

# FIG.9

| HEADER INFORMATION | PAY LOAD |
|---|---|
| 22.7 ms | 85～254 ms |

# FIG.10

TRANSMISSION SIDE | A(1) | B(1) | C(1) | D(1) | E(1) | A(2) | B(2) | C(2) | D(2) | E(2) | A(3) | ···

t1    t2

RECEPTION SIDE
(RATE CONVERTER)

A(1)'    A(2)'

TRANSMISSION DELAY    TRANSMISSION DELAY

## INTERNATIONAL SEARCH REPORT

| International application No. |
| --- |
| PCT/JP00/08125 |

| A. CLASSIFICATION OF SUBJECT MATTER |
| --- |
| Int.Cl⁷   H04B 3/54, H04L 29/08 |

Int.Cl⁷   H04B 3/54, H04L 29/08

According to International Patent Classification (IPC) or to both national classification and IPC

**B. FIELDS SEARCHED**

Minimum documentation searched (classification system followed by classification symbols)
Int.Cl⁷   H04B 3/54, H04N 7/173

Documentation searched other than minimum documentation to the extent that such documents are included in the fields searched
Jitsuyo Shinan Koho (Y1,Y2)    1926-1996    Toroku Jitsuyo Shinan Koho(U) 1994-2001
Kokai Jitsuyo Shinan Koho(U)   1971-2001    Jitsuyo Shinan Toroku Koho(Y2)1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 63-019992, A (Matsushita Electric Ind. Co., Ltd.), 27 January, 1988 (27.01.88), page 1, lower right column; Figs. 5 to 8   (Family: none) | 1-9 |
| A | JP, 02-127824, A (NEC Corporation), 16 May, 1990 (16.05.90), Figs. 1 to 3 & JP, 3010627, B2 | 1-9 |
| T | JP, 2000-174675, A (Matsushita Electric Ind. Co., Ltd.), 23 June, 2000 (23.06.00), Claims   (Family: none) | 1-9 |
| T | JP, 2001-036497, A (Mitsubishi Electric Corporation), 09 February, 2001 (09.02.01), Figs. 1 to 7; Claims   (Family: none) | 1-9 |
| T | JP, 2000-216752, A (Mitsubishi Electric Corporation), 04 August, 2000 (04.08.00), Claims   (Family: none) | 1-9 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 13 February, 2001 (13.02.01) | Date of mailing of the international search report 20 February, 2001 (20.02.01) |
| --- | --- |
| Name and mailing address of the ISA/ Japanese Patent Office | Authorized officer |
| Facsimile No. | Telephone No. |

Form PCT/ISA/210 (second sheet) (July 1992)

**EP 1 146 659 A1**

## INTERNATIONAL SEARCH REPORT

International application No.

PCT/JP00/08125

| C (Continuation). DOCUMENTS CONSIDERED TO BE RELEVANT | | |
|---|---|---|
| Category* | Citation of document, with indication, where appropriate, of the relevant passages | Relevant to claim No. |
| T | JP, 2000-165304, A (Mitsubishi Electric Corporation), 16 June, 2000 (16.06.00), Claims (Family: none) | 1-9 |
| T | JP, 2000-078062, A (Alcatel), 14 March, 2000 (14.03.00), Claims & EP, 975097, A2 & AU, 9941084, A & CA, 2277741, A1 & CN, 1251957, A | 1-9 |

Form PCT/ISA/210 (continuation of second sheet) (July 1992)

18